(19)

**Europäisches Patentamt**
**European Patent Office**
**Office européen des brevets**

(11) **EP 4 417 634 A1**

(12) **EUROPEAN PATENT APPLICATION**

(43) Date of publication:
**21.08.2024 Bulletin 2024/34**

(21) Application number: **23202695.5**

(22) Date of filing: **10.10.2023**

(51) International Patent Classification (IPC):
**C08G 18/10** $^{(2006.01)}$    **C08G 18/12** $^{(2006.01)}$
**C08G 18/28** $^{(2006.01)}$    **C08G 18/48** $^{(2006.01)}$
**C08G 18/50** $^{(2006.01)}$    **C08G 18/75** $^{(2006.01)}$

(52) Cooperative Patent Classification (CPC):
(C-Sets available)
**C08G 18/5024; C08G 18/10; C08G 18/12;**
**C08G 18/2865; C08G 18/482; C08G 18/758**

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.02.2023 US 202318168708**

(71) Applicant: **The Boeing Company**
**Arlington, VA 22202 (US)**

(72) Inventors:
• **Nowak, Andrew P.**
  **Arlington, 22202 (US)**
• **Godinho, Glenn B.**
  **Arlington, 22202 (US)**

(74) Representative: **Witte, Weller & Partner**
**Patentanwälte mbB**
**Postfach 10 54 62**
**70047 Stuttgart (DE)**

(54) **THERMOREVERSIBLE URETHANE-BASED ADHESIVE COMPOSITIONS AND ASSOCIATED METHODS FOR BONDING AND BONDED ARTICLES**

(57)    A thermoreversible urethane-based adhesive composition comprising the reaction product of a multifunctional maleimide species and a furan-endcapped prepolymer, wherein the furan-endcapped prepolymer comprises the reaction product of a monofunctional furan species and an isocyanate-terminated prepolymer, wherein the isocyanate-terminated prepolymer comprises the reaction product of a diisocyanate and a difunctional oligomer that is terminated at a first end with an alpha moiety, wherein the alpha moiety is a hydroxyl group or an amine group, and that is terminated at a second end, opposed from the first end, with an omega moiety, wherein the omega moiety is a hydroxyl group or an amine group. (Fig. 1)

**EP 4 417 634 A1**

(52) Cooperative Patent Classification (CPC): (Cont.)

C-Sets
**C08G 18/10, C08G 18/2865;**
**C08G 18/12, C08G 18/2865**

**Description**

FIELD

This application relates to adhesives and, more particularly, to thermoreversible adhesives.

BACKGROUND

Throughout the life of an aircraft-from manufacturing to in-flight service, and during maintenance-there is often a need to temporarily secure or install a part or feature, whether internally or externally of the aircraft. While various adhesives are known and have been certified for use in the aerospace industry, the unique properties of thermoreversible adhesives make them particularly attractive when parts are only temporarily secured or installed on an aircraft.

Thermoreversible adhesives are unique vis-a-vis traditional adhesives because the adhesive properties of thermoreversible adhesives are temperature dependent. Specifically, at certain lower temperatures, thermoreversible adhesives present their maximum bond strength, while at certain elevated temperatures, thermoreversible adhesives lose their adhesiveness. Therefore, such thermoreversible adhesives are useful for repairs.

Traditional thermoreversible adhesives are epoxy-based adhesives that reversibly couple and uncouple at about 60 °C and about 90 °C, respectively. Such epoxy-based thermoreversible adhesives are formulated by homogenizing a maleimide, such as 1,1'-(methylenedi-4,1-phenylene)bismaleimide, with furfuryl glycidyl ether at a temperature above the Diels-Alder decoupling temperature. Then, an amine-terminated polypropylene oxide species, such as JEFFAMINE® D-230 polyetheramine, is added to react with the epoxy groups, and then cast at elevated temperature to form a film adhesive.

Unfortunately, the furfuryl glycidyl ether required for epoxy-based thermoreversible adhesives can be difficult to source and, when available, can be quite expensive.

Accordingly, those skilled in the art continue with research and development efforts in the field of adhesives.

SUMMARY

Disclosed are thermoreversible urethane-based adhesive compositions.

In one example, the disclosed thermoreversible urethane-based adhesive composition comprises the reaction product of a multifunctional maleimide species and a furan-endcapped prepolymer, wherein the furan-endcapped prepolymer comprises the reaction product of a monofunctional furan species and an isocyanate-terminated prepolymer, wherein the isocyanate-terminated prepolymer comprises the reaction product of a diisocyanate and a difunctional oligomer that is terminated at a first end with an alpha moiety, wherein the alpha moiety is a hydroxyl group or an amine group, and that is terminated at a second end, opposed from the first end, with an omega moiety, wherein the omega moiety is a hydroxyl group or an amine group.

In another example, the disclosed thermoreversible urethane-based adhesive composition comprises the reaction product of 1,1'-(methylenedi-4,1-phenylene)bismaleimide and a furan-endcapped prepolymer, wherein the furan-endcapped prepolymer comprises the reaction product of at least one of furfurylamine and furan-3-methanol, and an isocyanate-terminated prepolymer, wherein the isocyanate-terminated prepolymer comprises the reaction product of a diisocyanate and a difunctional polyetheramine.

In yet another example, the disclosed thermoreversible urethane-based adhesive composition may be in the form of film.

Also disclosed are two-part adhesive systems.

In one example, the disclosed two-part adhesive system includes a first part comprising the reaction product of a monofunctional furan species and an isocyanate-terminated prepolymer, wherein the isocyanate-terminated prepolymer comprises the reaction product of a diisocyanate and a difunctional oligomer that is terminated at a first end with an alpha moiety, wherein the alpha moiety is a hydroxyl group or an amine group, and that is terminated at a second end, opposed from the first end, with an omega moiety, wherein the omega moiety is a hydroxyl group or an amine group; and a second part comprising a multifunctional maleimide species, wherein mixing together the first part with the second part yields a thermoreversible urethane-based adhesive composition.

Also disclosed are methods for bonding a first adherend with a second adherend, and associated bonded articles.

In one example, the disclosed method for bonding a first adherend with a second adherend includes steps of (1) positioning a thermoreversible urethane-based adhesive composition in physical contact with the first adherend and the second adherend, the thermoreversible urethane-based adhesive composition comprises the reaction product of a multifunctional maleimide species and a furan-endcapped prepolymer, wherein the furan-endcapped prepolymer comprises the reaction product of a monofunctional furan species and an isocyanate-terminated prepolymer, wherein the isocyanate-terminated prepolymer comprises the reaction product of a diisocyanate and a difunctional oligomer that is terminated at a first end with an alpha moiety, wherein the alpha moiety is a hydroxyl group or an amine group, and that is terminated at a second end, opposed from the first end, with an omega moiety, wherein the omega moiety is a hydroxyl group or an amine group; (2) heating the thermoreversible urethane-based adhesive composition; and (3) after the heating, cooling the thermoreversible urethane-based adhesive composition.

Other examples of the disclosed thermoreversible urethane-based adhesive compositions, two-part adhesive systems, bonding methods, and bonded articles will become apparent from the following detailed description, the accompanying drawings, and the appended claims.

BRIEF DESCRIPTION OF THE DRAWINGS

Fig. 1 is a perspective view of a film comprising the disclosed thermoreversible urethane-based adhesive composition;

Fig. 2 is a perspective view of a plurality of strip-like portions cut from the film of Fig. 1;

Fig. 3 is a flow diagram depicting one example of the disclosed method for bonding a first adherend with a second adherend;

Fig. 4 is a side cross-sectional view of a bonded article manufactured using the method depicted in Fig. 1;

Fig. 5 is a block diagram of aircraft production and service methodology; and

Fig. 6 is a schematic illustration of an aircraft.

DETAILED DESCRIPTION

Disclosed are thermoreversible adhesives used to bond substrates such as plastics, metals (e.g., aluminum, titanium, and the like), rubbers, composites (e.g., carbon fiber-reinforced plastics), ceramics, and the like. These thermoreversible urethane-based adhesive compositions, which are based on urethane linkages, with additional Diels-Alder thermoreversible bonds incorporated therein, can be softened at elevated temperatures, but then achieve maximum adhesive strength when cooled below the softening temperature.

Depending on the specific composition, the disclosed thermoreversible urethane-based adhesive compositions may have relatively low softening temperatures. In one specific, nonlimiting example, the disclosed thermoreversible urethane-based adhesive compositions may begin to soften at a temperature of about 60 °C or more. In another specific, nonlimiting example, the disclosed thermoreversible urethane-based adhesive compositions may begin to soften at a temperature of about 70 °C or more. In another specific, nonlimiting example, the disclosed thermoreversible urethane-based adhesive compositions may begin to soften at a temperature of about 80 °C or more. In another specific, nonlimiting example, the disclosed thermoreversible urethane-based adhesive compositions may begin to soften at a temperature of about 90 °C or more. In yet another specific, nonlimiting example, the disclosed thermoreversible urethane-based adhesive compositions may begin to soften at a temperature of about 100 °C or more.

The disclosed thermoreversible urethane-based adhesive compositions are the reaction product of a multifunctional maleimide species and a furan-endcapped prepolymer, as shown by Equation 1.

$$\boxed{\text{MULTIFUNCTIONAL MALEIMIDE SPECIES}} + \boxed{\text{FURAN-ENDCAPPED PREPOLYMER}} \longrightarrow \boxed{\text{THERMOREVERSIBLE URETHANE-BASED ADHESIVE COMPOSITION}} \quad \text{(Eq. 1)}$$

The multifunctional maleimide species of Equation 1 may have a functionality of $f=2$ or greater. Various multifunctional maleimide species may be used without departing from the scope of the present disclosure. In one specific, non-limiting example, the multifunctional maleimide species of Equation 1 may be 1,1'-(methylenedi-4,1-phenylene)bismaleimide. Other examples of suitable multifunctional maleimide species include, but are not limited to, bismaleimidoethane, dithio-bis-maleimidoethane, N,N'-(1,4-phenylene)dimaleimide, N,N'-(o-phenylene)dimaleimide, and N,N'-(1,3-phenylene)dimaleimide. Using combinations of multifunctional maleimide species is also contemplated.

The furan-endcapped prepolymer is the reaction product of a monofunctional furan species and an isocyanate-terminated prepolymer, as shown by Equation 2.

(Eq. 2)

Various monofunctional furan species may be used without departing from the scope of the present disclosure. In one general, non-limiting example, the monofunctional furan species of Equation 2 is a monoamine. In one specific, non-limiting example, the monofunctional furan species is furfurylamine. In another general, non-limiting example, the monofunctional furan species of Equation 2 is a monoalcohol. In one specific, non-limiting example, the monofunctional furan species is furan-3-methanol.

The isocyanate-terminated prepolymer is the reaction product of a diisocyanate and a difunctional oligomer, as shown by Equation 3.

(Eq. 3)

Various diisocyanates may be used without departing from the scope of the present disclosure. In one specific, non-limiting example, the diisocyanate of Equation 3 may be 4,4'-diisocyanato dicyclohexylmethane, which is commonly referred to as hydrogenated MDI or HMDI. Other examples of suitable diisocyanates include, but are not limited to, isophorone diisocyanate, toluene diisocyanate, methylenebis(phenyl isocyanate), and hexamethylene diisocyanate. Using combinations thereof is also contemplated.

The difunctional oligomer is terminated at a first end with an alpha moiety, wherein the alpha moiety is a hydroxyl group or an amine group. The difunctional oligomer is terminated at a second end, opposed from the first end, with an omega moiety, wherein the omega moiety is a hydroxyl group or an amine group.

Various difunctional alpha moiety, omega moiety terminated oligomers may be used as the difunctional oligomer of Equation 3. In one general, non-limiting expression, the difunctional oligomer may be a polyether, a polyester, and/or a polysiloxane. In one specific, non-limiting expression, the difunctional oligomer may be polyethylene glycol, polypropylene glycol, 1,3-polypropane diol, and/or polytetrahydrofuran.

Various examples of suitable difunctional oligomers will become apparent to those skilled in the art upon reading and understanding the present disclosure. As one general, non-limiting example, the difunctional oligomer of Equation 3 may be a polyetheramine. The polyetheramine may be a primary amine, and may have a number average molecular weight within a range spanning from about 200 to about 2500, or from about 230 to about 2000. As one specific, non-limiting example, the difunctional oligomer of Equation 3 may be JEFFAMINE® D-230 polyetheramine, which has a number average molecular weight of about 230. As another specific, non-limiting example, the difunctional oligomer of Equation 3 may be JEFFAMINE® D-2000 polyetheramine, which has a number average molecular weight of about 2000. Combinations of suitable difunctional oligomers is also contemplated.

Optionally, the disclosed thermoreversible urethane-based adhesive compositions may be presented in the form of a two-part adhesive system: a first part that includes the furan-endcapped prepolymer and a second part that includes the multifunctional maleimide species. See Equation 1. Mixing together the first part with the second part yields the disclosed thermoreversible urethane-based adhesive composition.

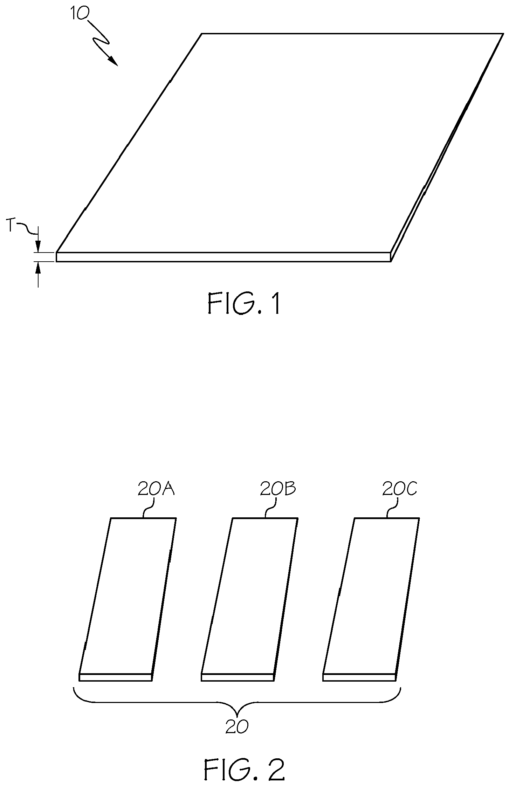

Referring now to Fig. 1, the disclosed thermoreversible urethane-based adhesive compositions may be cast as a film 10. Depending on intended use, the film 10 may have an average cross-sectional thickness (T) within a range spanning from about 1 mil to about 100 mils, or about 1 to about 50 mils, or about 10 to about 20 mils, or about 4 to about 10 mils. To further ease use and application of the disclosed thermoreversible urethane-based adhesive compositions, the film 10 may be cut into strip-like portions 20 (e.g., 20A, 20B and 20C), as shown in Fig. 2. While a film 10 and strip-like portions 20 are shown and described, those skilled in the art will appreciate that the disclosed thermoreversible urethane-based adhesive compositions may be useful in various configurations, not just films and strips, and that using the disclosed thermoreversible urethane-based adhesive compositions in configurations other than films and strips will not result in a departure from the scope of the present disclosure.

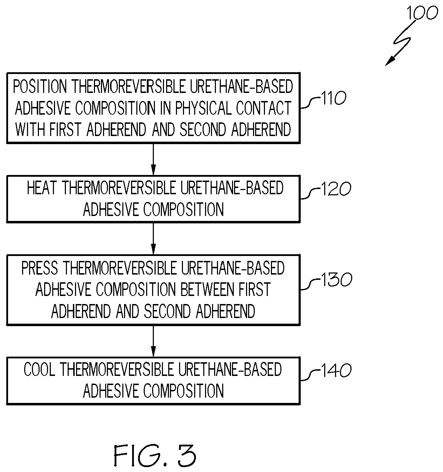

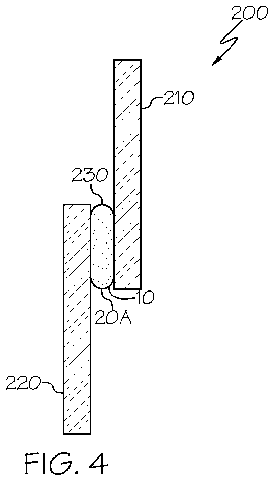

Referring now to Fig. 3, also disclosed are methods for bonding a first adherend with a second adherend. In one example, the disclosed method, generally designated 100, begins with the step of positioning 110 the disclosed thermoreversible urethane-based adhesive composition in physical contact with the first adherend 210 (Fig. 4) and the second adherend 220 (Fig. 4). For example, the step of positioning 110 may include positioning a film 10 in physical contact with the first adherend 210 and the second adherend 220, the film 10 comprising the thermoreversible urethane-based adhesive composition, as shown in Fig. 4.

The disclosed method 100 further includes the step of heating 120 the thermoreversible urethane-based adhesive composition. The step of heating 120 is performed while the first adherend 210 (Fig. 4) and the second adherend 220 (Fig. 4) are in physical contact with the disclosed thermoreversible urethane-based adhesive composition.

The step of heating 120 may include heating at least to a temperature at which the thermoreversible urethane-based adhesive composition begins to soften (i.e., to a temperature at or above the softening temperature). As one example, the step of heating 120 may include heating to a temperature of at least 60 °C. As another example, the step of heating 120 may include heating to a temperature of at least 70 °C. As another example, the step of heating 120 may include heating to a temperature of at least 80 °C. As another example, the step of heating 120 may include heating to a temperature of at least 90 °C. As yet another example, the step of heating 120 may include heating to a temperature of at least 100°C.

The disclosed method 100 further includes the step of cooling 140 the thermoreversible urethane-based adhesive composition. The step of cooling 140 the disclosed thermoreversible urethane-based adhesive composition is performed after the heating 120 step. The step of cooling 140 the disclosed thermoreversible urethane-based adhesive composition is also performed while the first adherend 210 (Fig. 4) and the second adherend 220 (Fig. 4) are in physical contact with the disclosed thermoreversible urethane-based adhesive composition.

The step of cooling 140 may include cooling at least to a temperature at which the thermoreversible urethane-based adhesive composition is solid (i.e., to a temperature below the softening temperature) and, more particularly, to a temperature at (or below) which the disclosed thermoreversible urethane-based adhesive composition achieves maximum adhesive strength. As one example, the step of cooling 140 may include cooling the disclosed thermoreversible urethane-based adhesive composition to a temperature of at most 50 °C. As another example, the step of cooling 140 may include cooling the disclosed thermoreversible urethane-based adhesive composition to a temperature of at most 40 °C. As another example, the step of cooling 140 may include cooling the disclosed thermoreversible urethane-based adhesive composition to a temperature of at most 30 °C. As yet another example, the step of cooling 140 may include cooling the disclosed thermoreversible urethane-based adhesive composition to a temperature of at most 20 °C.

The disclosed method 100 may further include the step of pressing 130 the disclosed thermoreversible urethane-based adhesive composition between the first adherend 210 (Fig. 4) and the second adherend 220 (Fig. 4). The amount of pressure applied may be at least 10 psi, such as about 10 psi to about 150 psi, or about 15 psi to about 30 psi. The step of pressing 130 may be an optional step, and performed simultaneously with the step of heating 120 or after the step of heating 120, such as promptly after the step of heating 120. Specifically, the step of pressing 130 may be performed while the disclosed thermoreversible urethane-based adhesive composition is at or above the softening temperature. As one example, the step of pressing 130 may be performed while the disclosed thermoreversible urethane-based adhesive composition is at a temperature of at least 60 °C. As another example, the step of pressing 130 may be performed while the disclosed thermoreversible urethane-based adhesive composition is at a temperature of at least 70 °C. As another example, the step of pressing 130 may be performed while the disclosed thermoreversible urethane-based adhesive composition is at a temperature of at least 80 °C. As another example, the step of pressing 130 may be performed while the disclosed thermoreversible urethane-based adhesive composition is at a temperature of at least 90 °C. As yet another example, the step of pressing 130 may be performed while the disclosed thermoreversible urethane-based adhesive composition is at a temperature of at least 100°C.

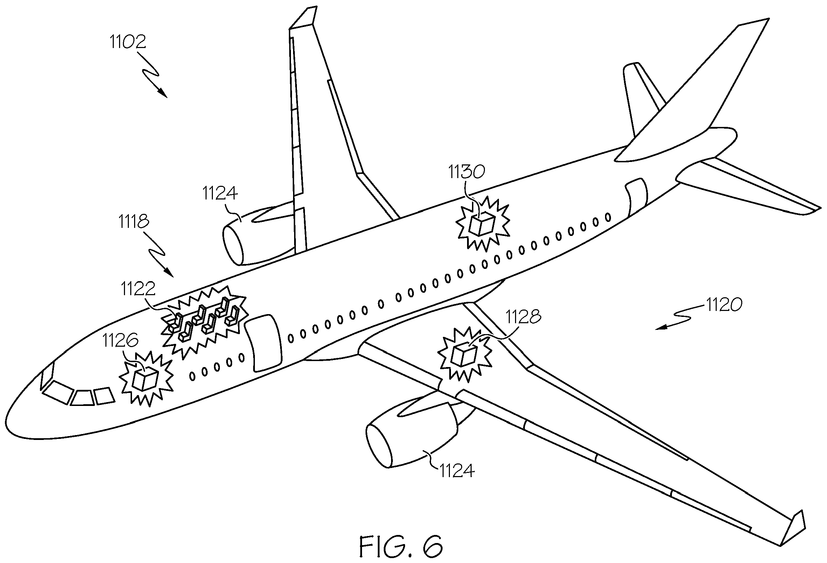

Referring now to Fig. 4, also disclosed is a bonded article, generally designated 200 that includes at least a first adherend 210 and a second adherend 220, and an adhesive joint 230 between the first adherend 210 and the second adherend 220. The adhesive joint 230 includes the disclosed thermoreversible urethane-based adhesive composition. For example, the first adherend 210 and/or the second adherend 220 may be a component of an aircraft 1102 (Fig. 6) in a manufacturing or maintenance environment or an aircraft 1102 in regular flight operations.

EXAMPLES

Example 1

To prepare the isocyanate-terminated prepolymer, 4,4'-diisocyanato dicyclohexylmethane ("HDMI") (2 equivalents, 1.27 g) was added to JEFFAMINE® D-2000 polyetheramine (1 equivalent, 5.00 g) in a Flacktek cup and mixed in the Flacktek for 30 seconds at 2000 RPM to homogenize. The mixture was left for 15 minutes at room temperature to ensure the reaction ran to completion.

While HMDI/ JEFFAMINE® D-2000 mixture was cooling, 1,1'-(methylenedi-4,1-phenylene)bismaleimide ("BMI") (1 equivalent, 0.87 g) was added to 1,4-dioxane (7.83 g) in a separate Flacktek cup to achieve a 10 wt% solids solution. The BMI solution was mixed for 1 minute at 2000 rpm in the Flacktek and then placed on an 80 °C hot plate to fully incorporate BMI into the dioxane.

After the 15 minute resting period, furfurylamine (a monofunctional furan species) (1 equivalent, 0.47 g) was added to the HMDI/ JEFFAMINE® D-2000 mixture and mixed for 2 minutes at 2000 rpm in the Flacktek. The resulting furan-endcapped prepolymer was the left in an 80 °C oven for 5-10 minutes.

The 10 wt% BMI in dioxane solution (make sure all BMI is dissolved in the Dioxane) was then added at once to the furan-endcapped prepolymer and mixed for 1 minute at 2000 rpm in the Flacktek. The reaction was immediately placed in an 80 °C water bath for 1 hour. The reaction was then removed from the water bath and left at room temperature overnight.

The following morning, the resulting thermoreversible urethane-based adhesive composition was placed back into the 80 °C water bath for 1 hr, and then Flackteked for 1 minute at 2000 rpm. This was done to ensure homogeneity from any undispersed regions following the initial mix. The reaction was placed back into the 80 °C water bath for 5-10 minutes. The reaction contents were then quickly cast on a sheet of silanized Mylar on top of a glass plate. This was completed in under 45 seconds to ensure the polymer did not cool below the softening temperature before casting. The film was left at room temperature for 24 hours under a hood, followed by 2 hours at 105 °C to flash off remaining dioxane, and finally left at room temperature for 3 hours to cool.

Lap shear joints were formed from 5 mil thick film adhesive by cutting 1 inch by 1 inch shapes from the thermoreversible urethane-based adhesive composition sheet while on the Mylar release film backing. The adhesive pieces were placed between and in contact with 1 inch by 4 inch aluminum lap shear bars. The lap shear coupons were placed in an oven (115 °C or 120 °C) for 1 hour before combing pairs to form lap shear coupons. The lap shear coupons were subjected to Instron testing and the results are provided in Table 1.

**TABLE 1**

| Sample | Max Load (ksi) |
|---|---|
| Set 1 (film on only one adherent) | 0.09 ± 0.03 |
| Set 2 (film applied to both adherents, 115 °C) | 0.16 ± 0.02 |
| Set 3 (film applied to both adherents, 120 °C) | 0.33 ± 0.02 |

Example 2

To prepare the isocyanate-terminated prepolymer, JEFFAMINE® D-2000 (0.8 equivalents, 5.00 g) was added to JEFFAMINE® D-230 (0.2 equivalents, 0.15 g) in a Flacktek cup and mixed for 1 minute at 2000 rpm. 4,4'-diisocyanato dicyclohexylmethane ("HDMI") (2 equivalents, 1.59 g) was added to the JEFFAMINE® D-2000/JEFFAMINE® D-230 mixture and mixed in the Flacktek for 30 seconds at 2000 RPM to homogenize. The mixture was left for 15 minutes at room temperature to ensure the reaction ran to completion.

While the HMDI/JEFFAMINE® D-2000/JEFFAMINE® D-230 mixture was cooling, 1,1'-(methylenedi-4,1-phenylene)bismaleimide ("BMI") (1 equivalent, 1.09 g) was added to 1,4-dioxane (9.79 g) in a separate Flacktek cup to achieve a 10 wt% solids solution. The BMI solution was mixed for 1 minute at 2000 rpm in the Flacktek and then placed on an 80 °C hot plate to fully incorporate BMI into the dioxane.

After the 15 minute resting period, furfurylamine (1 equivalent, 0.59 g) was added to the HMDI/JEFFAMINE® D-2000/JEFFAMINE® D-230 mixture and mixed for 2 minutes at 2000 rpm in the Flacktek. The resulting furan-endcapped prepolymer was the left in an 80 °C oven for 5-10 minutes.

The 10 wt% BMI in dioxane solution (making sure all BMI is dissolved in the dioxane) was then added at once to the furan-endcapped prepolymer and mixed for 1 minute at 2000 rpm in the Flacktek. The reaction was immediately placed in an 80 °C water bath for 1 hour. The reaction was then removed from the water bath and left at room temperature overnight.

The following morning, the polymer was placed back into the 80 °C water bath for 1 hr, and then Flackteked for 1 minute at 2000 rpm or until homogenous. The reaction was placed back into the 80 °C water bath for 5-10 minutes. The reaction contents were then quickly cast on a sheet of silanized Mylar on top of a glass plate. This was completed in under 45 seconds to ensure the polymer does not cool below the softening temperature before casting. The film was left at room temperature for 24 hours under a hood, followed by 2 hours at 105 °C to flash off remaining dioxane, and finally left at room temperature for 3 hours to cool.

The ratio of JEFFAMINE® D-2000 to JEFFAMINE® D-230 was 8:2. It should be noted that this recipe can be changed to achieve different ratios of JEFFAMINE® D-2000 to JEFFAMINE® D-230 (e.g., 7:3, 6:4, etc.). Those skilled in the art will appreciate that doing so will require corresponding changes to the quantities of the other chemical components (e.g., HDMI, furfurylamine, BMI, dioxane) being used.

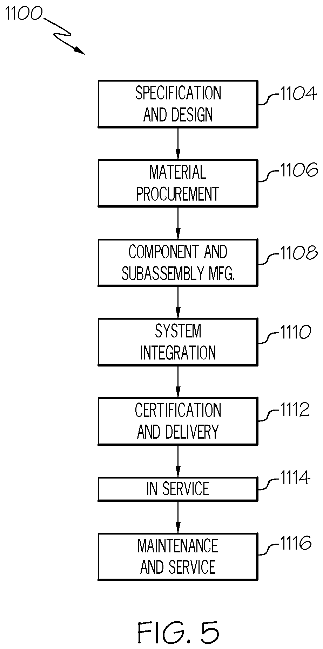

Examples of the subject matter disclosed herein may be described in the context of aircraft manufacturing and service method 1100 as shown in Fig. 5 and aircraft 1102 as shown in Fig. 6. In one or more examples, the disclosed thermoreversible urethane-based adhesive compositions may be used in aircraft manufacturing. During pre-production, illustrative method 1100 may include specification and design (block 1104) of aircraft 1102 and material procurement (block 1106). During production, component and subassembly manufacturing (block 1108) and system integration (block 1110) of aircraft 1102 may take place. Thereafter, aircraft 1102 may go through certification and delivery (block 1112) to be placed in service (block 1114). While in service, aircraft 1102 may be scheduled for routine maintenance and service (block 1116). Routine maintenance and service may include modification, reconfiguration, refurbishment, etc. of one or more systems of aircraft 1102.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 6, an aircraft 1102 produced by illustrative method 1100 may include an airframe 1118 with a plurality of high-level systems 1120 and an interior 1122. Examples of high-level systems 1120 include one or more of a propulsion system 1124, an electrical system 1126, a hydraulic system 1128, and an environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

The disclosed thermoreversible urethane-based adhesive compositions may be employed during any one or more of the stages of the manufacturing and service method 1100. For example, components or subassemblies corresponding to component and subassembly manufacturing (block 1108) may be fabricated or manufactured using the disclosed thermoreversible urethane-based adhesive compositions. Also, one or more examples of the disclosed thermoreversible urethane-based adhesive compositions may be utilized during production stages (block 1108 and block 1110), for example, by substantially expediting assembly of or reducing the cost of aircraft 1102. Similarly, one or more examples of the disclosed thermoreversible urethane-based adhesive compositions may be utilized, for example and without limitation, while aircraft 1102 is in service (block 1114) and/or during maintenance and service (block 1116).

Further, the disclosure comprises examples according to the following clauses.

Clause 1. A thermoreversible urethane-based adhesive composition comprising a reaction product of:

a multifunctional maleimide species; and

a furan-endcapped prepolymer,

wherein the furan-endcapped prepolymer comprises a reaction product of:

a monofunctional furan species; and

an isocyanate-terminated prepolymer,

wherein the isocyanate-terminated prepolymer comprises a reaction product of:

a diisocyanate; and

a difunctional oligomer that is terminated (a) at a first end with an alpha moiety, wherein the alpha moiety is a hydroxyl group or an amine group, and (b) at a second end, opposed from the first end, with an omega moiety, wherein the omega moiety is a hydroxyl group or an amine group.

Clause 2. The thermoreversible urethane-based adhesive composition of Clause 1 wherein the difunctional oligomer is one of a polyether, a polyester, or a polysiloxane.

Clause 3. The thermoreversible urethane-based adhesive composition of Clause 1 or 2 wherein the difunctional oligomer is one of a polyethylene glycol, a polypropylene glycol, a 1,3-polypropane diol, or a polytetrahydrofuran.

Clause 4. The thermoreversible urethane-based adhesive composition of any of Clauses 1-3 wherein the difunctional oligomer is a polyetheramine.

Clause 5. The thermoreversible urethane-based adhesive composition of Clause 4 wherein the polyetheramine is a primary amine having a number average molecular weight within a range spanning from about 200 to about 2500.

Clause 6. The thermoreversible urethane-based adhesive composition of any of Clauses 1-5 wherein the diisocyanate is a member of a group consisting of 4,4'-diisocyanato dicyclohexylmethane, isophorone diisocyanate, toluene diisocyanate, methylenebis(phenyl isocyanate), hexamethylene diisocyanate, and combinations thereof.

Clause 7. The thermoreversible urethane-based adhesive composition of any of Clauses 1-6 wherein the diisocyanate is 4,4'-diisocyanato dicyclohexylmethane.

Clause 8. The thermoreversible urethane-based adhesive composition of any of Clauses 1-7 wherein the monofunctional furan species is a monoamine.

Clause 9. The thermoreversible urethane-based adhesive composition of any of Clauses 1-8 wherein the monofunctional furan species is furfurylamine.

Clause 10. The thermoreversible urethane-based adhesive composition of any of Clauses 1-9 wherein the monofunctional furan species is a monoalcohol.

Clause 11. The thermoreversible urethane-based adhesive composition of any of Clauses 1-10 wherein the monofunctional furan species is furan-3-methanol.

Clause 12. The thermoreversible urethane-based adhesive composition of any of Clauses 1-11 wherein the multifunctional maleimide species has a functionality of f=2 or greater.

Clause 13. The thermoreversible urethane-based adhesive composition of any of Clauses 1-12 wherein the multifunctional maleimide species is selected from the group consisting of 1,1'-(methylenedi-4,1-phenylene)bismaleimide, bismaleimidoethane, dithio-bis-maleimidoethane, N,N'-(1,4-phenylene)dimaleimide, N,N'-(o-phenylene)dimaleimide, N,N'-(1,3-phenylene)dimaleimide, and combinations thereof.

Clause 14. The thermoreversible urethane-based adhesive composition of any of Clauses 1-13 wherein the multifunctional maleimide species is 1,1'-(methylenedi-4,1-phenylene)bismaleimide.

Clause 15. A film comprising the thermoreversible urethane-based adhesive composition of any of Clauses 1-14.

Clause 16. The film of Clause 15 comprising an average cross-sectional thickness within a range spanning from about 1 mil to about 100 mils.

Clause 17. The film of Clause 15 or 16 cut into strip-like portions.

Clause 18. A method for bonding a first adherend with a second adherend, the method comprising:

positioning the thermoreversible urethane-based adhesive composition of Claim 1 in physical contact with the first adherend and the second adherend;

heating the thermoreversible urethane-based adhesive composition; and after the heating, cooling the thermoreversible urethane-based adhesive composition.

Clause 19. The method of Clause 18 wherein the positioning comprises positioning a film in physical contact with the first adherend and the second adherend, the film comprising the thermoreversible urethane-based adhesive composition.

Clause 20. The method of Clause 18 or 19 wherein the heating comprises heating at least to a temperature at which the thermoreversible urethane-based adhesive composition begins to soften.

Clause 21. The method of any of Clauses 18-20 wherein the heating comprises heating the thermoreversible urethane-based adhesive composition to a temperature of at least 90 °C.

Clause 22. The method of any of Clauses 18-21 wherein the heating comprises heating the thermoreversible urethane-based adhesive composition to a temperature of at least 100 °C.

Clause 23. The method of any of Clauses 18-22 wherein the cooling comprises cooling the thermoreversible urethane-based adhesive composition to a temperature of at most 40 °C.

Clause 24. The method of any of Clauses 18-23 wherein the cooling comprises cooling the thermoreversible urethane-based adhesive composition to a temperature of at most 30 °C.

Clause 25. The method of any of Clauses 18-24 further comprising pressing the thermoreversible urethane-based adhesive composition between the first adherend and the second adherend.

Clause 26. The method of Clause 25 wherein the pressing is performed while the thermoreversible urethane-based adhesive composition is at a temperature of at least 90 °C.

Clause 27. A bonded article comprising a first adherend, a second adherend, and an adhesive joint between the first adherend and the second adherend, the adhesive joint comprising the thermoreversible urethane-based adhesive composition of any of Clauses 1-14.

Clause 28. The bonded article of Clause 27 wherein at least one of the first adherend and the second adherend is a component of an aircraft in a manufacturing or maintenance environment.

Clause 29. The bonded article of Clause 27 or 28 wherein at least one of the first adherend and the second adherend is a component of an aircraft in regular flight operations.

Clause 30. A thermoreversible urethane-based adhesive composition comprising a reaction product of:

1,1'-(methylenedi-4,1-phenylene)bismaleimide; and

a furan-endcapped prepolymer,

wherein the furan-endcapped prepolymer comprises a reaction product of:

at least one of furfurylamine and furan-3-methanol; and

an isocyanate-terminated prepolymer,

wherein the isocyanate-terminated prepolymer comprises a reaction product of:

a diisocyanate; and

a difunctional polyetheramine.

Clause 31. A two-part adhesive system comprising:

a first part comprising a reaction product of:

a monofunctional furan species; and

an isocyanate-terminated prepolymer,

wherein the isocyanate-terminated prepolymer comprises a reaction product of:

a diisocyanate; and

a difunctional oligomer that is terminated (a) at a first end with an alpha moiety, wherein the alpha moiety is a hydroxyl group or an amine group, and (b) at a second end, opposed from the first end, with an omega moiety, wherein the omega moiety is a hydroxyl group or an amine group; and

a second part comprising a multifunctional maleimide species,

wherein mixing together the first part with the second part yields a thermoreversible urethane-based adhesive composition.

Although various examples of the disclosed thermoreversible urethane-based adhesive compositions, two-part adhesive systems, bonding methods, and bonded articles have been shown and described, modifications may occur to those skilled in the art upon reading the specification. The present application includes such modifications and is limited only by the scope of the claims.

**Claims**

1. A thermoreversible urethane-based adhesive composition comprising a reaction product of:

a multifunctional maleimide species; and
a furan-endcapped prepolymer,
wherein the furan-endcapped prepolymer comprises a reaction product of:

a monofunctional furan species; and
an isocyanate-terminated prepolymer,
wherein the isocyanate-terminated prepolymer comprises a reaction product of:

a diisocyanate; and
a difunctional oligomer that is terminated (a) at a first end with an alpha moiety, wherein the alpha moiety is a hydroxyl group or an amine group, and (b) at a second end, opposed from the first end, with an omega moiety, wherein the omega moiety is a hydroxyl group or an amine group.

2. The thermoreversible urethane-based adhesive composition of Claim 1 wherein the difunctional oligomer is one of a polyether, a polyester, or a polysiloxane; and/or wherein the difunctional oligomer is one of a polyethylene glycol, a polypropylene glycol, a 1,3-polypropane diol, or a polytetrahydrofuran; and/or wherein the difunctional oligomer is a polyetheramine, wherein the polyetheramine preferably is a primary amine having a number average molecular weight within a range spanning from about 200 to about 2500.

3. The thermoreversible urethane-based adhesive composition of Claim 1 or 2 wherein the diisocyanate is a member of a group consisting of 4,4'-diisocyanato dicyclohexylmethane, isophorone diisocyanate, toluene diisocyanate, methylenebis(phenyl isocyanate), hexamethylene diisocyanate, and combinations thereof; and/or wherein the diisocyanate is 4,4'-diisocyanato dicyclohexylmethane.

4. The thermoreversible urethane-based adhesive composition of any of Claims 1-3 wherein the monofunctional furan species is a monoamine; and/or wherein the monofunctional furan species is furfurylamine; and/or wherein the monofunctional furan species is a monoalcohol; and/or wherein the monofunctional furan species is furan-3-methanol.

5. The thermoreversible urethane-based adhesive composition of any of Claims 1-4 wherein the multifunctional maleimide species has a functionality of f=2 or greater; and/or wherein the multifunctional maleimide species is selected from the group consisting of 1,1'-(methylenedi-4,1-phenylene)bismaleimide, bismaleimidoethane, dithio-bis-maleimidoethane, N,N'-(1,4-phenylene)dimaleimide, N,N'-(o-phenylene)dimaleimide, N,N'-(1,3-phenylene)dimaleimide, and combinations thereof; and/or wherein the multifunctional maleimide species is 1,1'-(methylenedi-4,1-phenylene)bismaleimide.

6. A film (10) comprising the thermoreversible urethane-based adhesive composition of any of Claims 1-5.

7. The film (10) of Claim 6 comprising an average cross-sectional thickness within a range spanning from about 1 mil to about 100 mils.

8. The film (10) of Claims 6 or 7 cut into strip-like portions (20).

9. A method (100) for bonding a first adherend (210) with a second adherend (220), the method (100) comprising:

positioning (110) the thermoreversible urethane-based adhesive composition of any of Claims 1-5 in physical contact with the first adherend (210) and the second adherend (220);
heating (120) the thermoreversible urethane-based adhesive composition; and
after the heating (120), cooling (140) the thermoreversible urethane-based adhesive composition.

10. The method (100) of Claim 9 wherein the positioning comprises positioning a film (10) in physical contact with the first adherend (210) and the second adherend (220), the film (10) comprising the thermoreversible urethane-based adhesive composition.

11. The method (100) of Claim 9 or 10 wherein the heating (120) comprises heating at least to a temperature at which the thermoreversible urethane-based adhesive composition begins to soften.

12. The method (100) of any of Claims 9-11 wherein the heating (120) comprises heating the thermoreversible urethane-based adhesive composition to a temperature of at least 90 °C, or to a temperature of at least 100 °C.

13. The method of any of Claims 9-12 wherein the cooling (140) comprises cooling the thermoreversible urethane-based adhesive composition to a temperature of at most 40 °C, or to a temperature of at most 30 °C.

14. The method (100) of any of Claims 9-13 further comprising pressing (130) the thermoreversible urethane-based adhesive composition between the first adherend (210) and the second adherend (220), wherein the pressing (130) preferably is performed while the thermoreversible urethane-based adhesive composition is at a temperature of at least 90 °C.

15. A bonded article (200) comprising a first adherend (210), a second adherend (220), and an adhesive joint (230) between the first adherend (210) and the second adherend (220), the adhesive joint (230) comprising the thermoreversible urethane-based adhesive composition of any of Claims 1-5; wherein preferably at least one of the first adherend (210) and the second adherend (220) is a component of an aircraft (1102) in a manufacturing or maintenance environment, or in regular flight operations.

FIG. 1

FIG. 2

100

POSITION THERMOREVERSIBLE URETHANE-BASED ADHESIVE COMPOSITION IN PHYSICAL CONTACT WITH FIRST ADHEREND AND SECOND ADHEREND — 110

HEAT THERMOREVERSIBLE URETHANE-BASED ADHESIVE COMPOSITION — 120

PRESS THERMOREVERSIBLE URETHANE-BASED ADHESIVE COMPOSITION BETWEEN FIRST ADHEREND AND SECOND ADHEREND — 130

COOL THERMOREVERSIBLE URETHANE-BASED ADHESIVE COMPOSITION — 140

FIG. 3

FIG. 4

1100

SPECIFICATION
AND DESIGN — 1104

MATERIAL
PROCUREMENT — 1106

COMPONENT AND
SUBASSEMBLY MFG. — 1108

SYSTEM
INTEGRATION — 1110

CERTIFICATION
AND DELIVERY — 1112

IN SERVICE — 1114

MAINTENANCE
AND SERVICE — 1116

FIG. 5

FIG. 6

Europäisches Patentamt
European Patent Office
Office européen des brevets

# EUROPEAN SEARCH REPORT

**Application Number**

EP 23 20 2695

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/062056 A1 (KOBAYASHI KENJI [JP] ET AL) 4 March 2021 (2021-03-04) * paragraphs [0128], [0131]; example 1 * | 1-15 | INV. C08G18/10 C08G18/12 C08G18/28 |
| X | US 9 260 640 B1 (MAC MURRAY BENJAMIN C [US] ET AL) 16 February 2016 (2016-02-16) * First Example Formulation * * column 10, lines 4-21 * | 1-15 | C08G18/48 C08G18/50 C08G18/75 |
| A | CN 111 825 866 A (JINLING INST TECHNOLOGY) 27 October 2020 (2020-10-27) * example 1 * | 1-15 | |

**TECHNICAL FIELDS SEARCHED (IPC)**

C08G

The present search report has been drawn up for all claims

| Place of search | Date of completion of the search | Examiner |
|---|---|---|
| Munich | 13 February 2024 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 4 417 634 A1

EP 23 20 2695

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2024

| Patent document cited in search report | | Publication date | Patent family member(s) | | Publication date |
|---|---|---|---|---|---|
| US 2021062056 | A1 | 04-03-2021 | CN | 111194342 A | 22-05-2020 |
| | | | EP | 3702429 A1 | 02-09-2020 |
| | | | JP | WO2019082434 A1 | 05-11-2020 |
| | | | US | 2021062056 A1 | 04-03-2021 |
| | | | WO | 2019082434 A1 | 02-05-2019 |
| US 9260640 | B1 | 16-02-2016 | NONE | | |
| CN 111825866 | A | 27-10-2020 | NONE | | |

EPO FORM P0459

For more details about this annex : see Official Journal of the European Patent Office, No. 12/82